**Europäisches Patentamt**

(19) **European Patent Office**

**Office européen des brevets**

(11) Numéro de publication : **0 052 555 B2**

## (12) NOUVEAU FASCICULE DE BREVET EUROPEEN

(45) Date de publication du nouveau fascicule du brevet : **28.08.91 Bulletin 91/35**

(51) Int. Cl.⁵ : **C08L 23/04**

(21) Numéro de dépôt : **81401763.8**

(22) Date de dépôt : **04.11.81**

(54) Compositions de polyéthylène améliorées pour extrusion, notamment pour extrusion-soufflage.

(30) Priorité : **13.11.80 FR 8024096**

(43) Date de publication de la demande :
**26.05.82 Bulletin 82/21**

(45) Mention de la délivrance du brevet :
**29.05.85 Bulletin 85/22**

(45) Mention de la décision concernant
l'opposition :
**28.08.91 Bulletin 91/35**

(84) Etats contractants désignés :
**AT BE CH DE FR GB IT LI NL SE**

(56) Documents cités :
**DD-A- 126 977**
**DE-A- 2 844 363**
**DE-A- 2 943 380**
**FR-A- 1 357 654**
**FR-A- 2 145 650**
**FR-A- 2 313 424**
**FR-A- 2 326 446**
**GB-A- 1 476 480**
**GB-A- 2 028 716**
**US-A- 3 914 342**

(56) Documents cités :
**Plastverarbeiter 31 (Sept. 1980), 537-40**
**"Molecular weight distribution effects on**
**HDPE-LDPE film blends" by V.J. Smith, Tech-**
**nical Papers, Soc. of Plastic Engineers, March**
**11-12(1975), page 38ff.**
**JP-A-79/100444**

(73) Titulaire : **BP Chimie Société Anonyme**
**Tour Neptune - La Défense 1 20, place de**
**Seine**
**F-92400 Courbevoie (FR)**

(72) Inventeur : **Thiersault, Jean Paul**
**7, Lotissement la Croix d'Aymard**
**F-13920 Saint-Mitre-les-Remparts (FR)**
**Inventeur : Durand, Daniel**
**23, Lotissement les Rayettes Chemin du**
**Maroc**
**F-13500 Martigues (FR)**
**Inventeur : Senez, Alain**
**1, rue de la Lavande**
**F-13480 Callas-Cabries (FR)**

(74) Mandataire : **Patentanwälte Beetz sen. - Beetz**
**jun. Timpe - Siegfried - Schmitt-Fumian**
**Steinsdorfstrasse 10**
**W-8000 München 22 (DE)**

**EP 0 052 555 B2**

## Description

L'invention a pour objet des compositions de polyéthylène améliorées, particulièrement aptes à la fabrication d'objets divers selon les techniques courantes d'extrusion et notamment aptes à la fabrication de corps creux et de films par extrusion-soufflage.

Il est déjà connu d'utiliser, notamment pour la fabrication par extrusion-soufflage de bouteilles pour emballage du lait, des mélanges d'un polyéthylène obtenu par un procédé sous basse pression, généralement inférieure à $4.10^6$ Pa, et ayant une densité supérieure à 0,940, et d'un polyéthylène obtenu par polymérisation radicalaire d'éthylène sous haute pression généralement supérieure à $10^8$ Pa, appelé "polyéthylène haute pression" et ayant une densité inférieure à 0,930, ces mélanges contenant généralement de 10 à 50% en poids de polyéthylène haute pression.

Ces mélanges offrent, par rapport au polyéthylène de haute densité divers avantages tels qu'une souplesse améliorée et une plus grande facilité de mise en oeuvre. Ils présentent toutefois certains inconvénients tels qu'une résistance au choc et une résistance à la fissuration sous tension relativement médiocres.

La demanderesse a maintenant trouvé des compositions constituées essentiellement de polyéthylène de haute densité et de certains copolymères d'éthylène et d'une ou plusieurs autres alpha-oléfines du type généralement appelé polyéthylène de basse densité linéaire (PEBDL), ces compositions ayant une souplesse et une aptitude de mise en oeuvre excellentes sans présenter les inconvénients des mélanges cités ci-dessus.

L'invention concerne donc des compositions de polyéthylène à propriétés améliorées comprenant de :

a) 50 à 98% en poids de polyéthylène haute densité, de densité supérieure ou égale à 0,940,

b) 2 à 50% en poids de polyéthylène de basse densité linéaire, de densité inférieure à 0,930.

Le polyéthylène haute densité, de densité supérieure ou égale à 0,940, entrant dans les compositions selon l'invention est préparé suivant l'un des procédés connus de polymérisation sous basse pression, par exemple sous pression inférieure à $4.10^6$ Pa, en présence d'un catalyseur contenant un composé d'un métal de transition des sous-groupes IVa, Va et VIa de la classification périodique des éléments, ce catalyseur étant généralement activé par un composé organométallique, tel qu'un composé organoaluminique. Ce polyéthylène de haute densité peut être préparé soit par homopolymérisation d'éthylène, soit par copolymérisation, pour au moins 96% en poids d'éthylène et pour au plus 4% en poids d'une alpha-oléfine supérieure comportant de 3 à 8 atomes de carbone telle que par exemple le propylène ou le n-butène-1.

Le polyéthylène de basse densité linéaire utilisé est obtenu par copolymérisation, pour 85 à 95% en poids, d'éthylène et, pour 5 à 15% en poids, d'une ou plusieurs alpha-oléfines supérieures comportant de 3 à 8 atomes de carbone, choisies notamment parmi le propylène, le n-butène-1, le n-hexène-1, le méthyl-4-pentène-1 ou le n-octène-1, la copolymérisation du mélange des monomères étant effectuée selon l'une des procédés sous basse pression connus, en particulier sous pression inférieure à $4.10^6$ Pa, en présence d'un catalyseur contenant un composé de métal de transition tel que défini ci-dessus.

Le polyétylène de basse densité linéaire est préparé par copolymérisation réalisée en phase gazeuze. En particulier, il peut être avantageusement préparé selon le procédé de copolymérisation d'éthylène et d'alpha-oléphine supérieure en lit fluidisé décrit dans le brevet français No. 2 405 961.

On a trouvé en effet, que ces polyéthylènes de basse densité linéaires préparés selon ce procédé de copolymérisation en phase gazeuse ont une structure particulière et apportent ainsi aux compositions selon l'invention des propriétés remarquables et avantageuses.

Cette structure peut être mise en évidence notamment par analyse enthalpique différentielle qui révèle que ces polyéthylènes de basse densité linéaires comportent à côté d'une phase cristalline de point de fusion supérieur à 115°C, une phase amorphe relativement importante dont la plage de fusion assez étalée est inférieure à 115°C.

Le mélange des constituants des compositions selon l'invention est de préférence réalisé à l'état fondu. Une méthode efficace consiste à mélanger d'abord les constituants à l'état solide, en granulés ou en poudre, puis à parfaire le mélange à l'état fondu dans des machines de type courant telles que des extrudeuses monovis ou double vis, ces opérations étant suivies d'une granulation. Dans certains cas, il est possible de réaliser le mélange à l'état fondu directement dans les machines de transformation, à partir des granulés ou des poudres des constituants mélangés préalablement à l'état solide.

Pour assurer un mélange aussi homogène que possible des constituants des compositions selon l'invention, l'indice de fluidité (mesuré selon la norme NF T 51016) du polyéthylène de basse densité linéaire est égal ou supérieur au quart de l'indice de fluidité du polyéthylène de haute densité.

Lorsque les compositions sont destinées aux applications de l'extrusion ou de l'extrusion-soufflage, notamment à la fabrication de bouteilles ou de films, il est alors recommandé, pour éviter la formation de fish-eyes et obtenir des objets ayant un bel aspect de surface, d'utiliser un polyéthylène de basse densité linéaire, dont l'indice de fluidité soit égal ou supérieur à celui du polyéthylène de haute densité.

Sans être limitatifs, les exemples qui suivent illustrent les avantages des compositions selon l'invention sur les mélanges antérieurement connus. Les polyéthylènes utilisés dans ces exemples ont les caractéristiques suivantes :

– Polyéthylène de haute densité, homopolymère de marque NATENE 60020 AG (exemples 1 et 2) :
. Densité : 0,960
. Indice de fluidité sous 5 kg à 190°C : 1,2
. Indice de fluidité sous 2,16 kg à 190°C : 0,2

– Polyéthylène de haute densité de marque NATENE 54000 FB, copolymère d'éthylène et de n-butène-1 (exemple 3) :
. Teneur en motifs dérivés du n-butène-1 : 0,6% en poids
. Densité : 0,954
. Indice de fluidité sous 8,5 kg à 190°C : 1,2
. Indice de fluidité sous 2,16 kg à 190°C : <0,1

– Polyéthylène de basse densité linéaire de marque NATENE BD 404, copolymère d'éthylène et de n-butène-1 préparé selon un procédé en lit fluidisé (exemples 1, 2 et 3) :
. Teneur en motifs dérivés du n-butène-1 : 13,8% en poids
. Densité : 0,913
. Indice de fluidité sous 2,16 kg à 190°C : 0,55
. Résistance à la flexion : 21 MPa
. Enthalpie de fusion : - 117 J/g

– Polyéthylène haute pression (Polyéthylène HP) (exemples 1, 2 et 3)
. Densité : 0,920
. Indice de fluidité sous 2,16 kg à 190°C : 0,7

Exemple 1

On réalise, par mélange sur une granulatrice Werner 28 à double vis fonctionnant à température de 200°C à une vitesse de rotation de vis de 200 tours par minute, une composition (A) selon l'invention contenant 95% en poids de polyéthylène haute densité "NATENE 60020 AG" et 5% en poids de PEBDL "NATENE BD 404". A titre de comparaison, on réalise une autre composition (B) contenant 95% en poids de "NATENE 60020 AG" et 5% en poids de polyéthylène haute pression.

Les propriétés mécaniques des deux compositions mesurées sur plaques moulées sont indiquées dans le tableau I, ainsi que celles du polyéthylène haute densité "NATENE 60020 AG".

On constate que la composition (A) selon l'invention présente une résistance au choc à 23°C très supérieure à celle de la composition (B) contenant du polyéthylène haute pression ou à celle du polyéthylène haute densité "NATENE 60020 AG" seul.

On constate également que la composition (A) possède une résistance à la fissuration sous tension sur pièces moulées, soit une résistance au "stress-cracking" selon la norme ASTM D 1693 supérieure à celle de la composition (B) ou à celle du polyéthylène haute densité "NATENE 60020 AG".

Avec chacune des deux compositions (A) et (B), on réalise par extrusion-soufflage sur machine Fischer de diamètre de 50 mm des flacons d'un poids de 35 g de capacité de 1 litre. La résistance à la compression longitudinale est indiquée dans le tableau II.

La bonne compatibilité du "NATENE BD 404" avec le polyéthylène de haute densité "NATENE 60020 AG" permet à la composition (A) de conserver pratiquement la rigidité du polyéthylène haute densité. Par contre, la baisse de rigidité est importante pour les flacons fabriqués avec la composition (B) contenant le polyéthylène haute pression.

Sur le plan de la mise en oeuvre, on ne note pas de différences entre les deux compositions (A) et (B) et le polyéthylène haute densité seul, hormis un gonflement en filière plus important pour les compositions (A) et (B).

Exemple 2

On réalise sur un granulatrice Werner 28 à double vis fonctionnant à température de 200°C à une vitesse de rotation de vis de 200 tours par minute des compositions (C) et (D) contenant d'une part 80% en poids de polyéthylène haute densité "NATENE 60020 AG" et d'autre part respectivement soit 20% en poids de "NATENE BD 404", soit 20% en poids d'un polyéthylène haute pression.

Les mesures de la résistance à la fissuration sous contrainte effectuées sur pièces moulées (résistance au "stress-cracking" selon norme ASTM D 1693) montrent la supériorité très nette de la composition (C) conte-3 nant du polyéthylène de basse densité linéaire "NATENE BD 404". Les résultats de ces mesures sont indiqués dans le tableau III.

Exemple 3

On réalise par mélange de granulés une composition (E) contenant 80% en poids de "NATENE 54000 FB" et 20% en poids de "NATENE BD 404". Cette composition est extrudée sous forme de film gaine de 20 µm d'épaisseur dans les conditions suivantes :
– Extrudeuse Semivex : diamètre de vis de 45 mm.
– Température d'extrusion : 200°C.
– Vitesse de rotation de vis : 60 tours par minute.
– Taux de gonflage (diamètre de bulle/diamètre de filière) : 3,9.
– Hauteur de ligne de cristallisation (hauteur correspondant au passage de l'état fondu à l'état cristallin qui se repère en général par une diminution brusque de transparence du film) : 90 cm.
– Largeur à plat : 35 cm.
– Vitesse d'étirage : 16 m/min.

On étudie aussi, à titre de comparaison et dans les mêmes conditions, les propriétés du mélange (F) contenant 80% en poids de "NATENE 54000 FB" et 20% en poids de polyéthylène haute pression, puis celles du "NATENE 54000 FB. Les propriétés mécaniques des films sont indiquées dans le tableau IV.

Par rapport au polyéthylène haute densité, "NATENE 54000 FB", la composition (E) selon l'invention comportant le "NATENE BD 404" présente une résistance à la perforation du film très améliorée. La composition (F) contenant 20% en poids de polyéthylène haute pression conserve une bonne résistance à la déchirure des films, mais la résistance à la perforation est alors très faible.

"NATENE" est une marque de fabrique déposée de matières plastiques du type polyéthylène, vendues par BP CHIMIE S.A. Il convient donc d'entendre dans la description et les exemples ci-dessus "NATENE®" pour "NATENE".

TABLEAU I—Propriétés mécaniques

| | Densité | Indice de fluidité sous 5 kg à 190°C | Résistance flexion (MPa) | Résistance au choc charpy entaillé à 23°C (kJ/m²) | Résistance au stress-cracking (Norme ASTM D 1693) |
|---|---|---|---|---|---|
| Composition (A) 95% "NATENE 60020 AG" 5% "NATENE BD 404" | 0,957 | 1,4 | 58 | 12 | 10 |
| Composition (B) 95% "NATENE 60020 AG" 5% Polyéthylène HP | 0,957 | 1,2 | 58 | 7 | 8 |
| "NATENE 60020 AG" | 0,960 | 1,2 | 61 | 7 | 6 |

TABLEAU II—Rigidité des flacons

| | Résistance à la compression (kgf) |
|---|---|
| Composition (A) 95% "NATENE 60020 AG" 5% "NATENE BD 404" | 26,8 |
| Composition (B) 95% "NATENE 60020 AG" 5% Polyéthylène HP | 23,9 |
| "NATENE 60020 AG" | 27 |

EP 0 052 555 B2

## TABLEAU III—Propriétés mécaniques

| | Densité | Indice de fluidité sous 5 kg à 190°C | Résistance à la flexion (MPa) | Résistance au stress-cracking selon norme ASTM D 1693 (h) |
|---|---|---|---|---|
| Composition (C) 80% NATENE 60020 AG 20% NATENE BD 404 | 0,951 | 1,5 | 50 | 20 |
| Composition (D) 80% NATENE 60020 AG 20% Polyéthylène HP | 0,952 | 1,55 | 50 | 2 |
| NATENE 60020 AG | 0,960 | 1,2 | 61 | 6 |

## TABLEAU IV—Propriétés des films

| | Densité | Indice de fluidité sous 8,5 kg à 190°C | Résistance traction sens machine (MPa) | Allongement sens machine (%) | Résistance à la déchirure ramenée à l'épaisseur de 25 µm (cN) | | Résistance à la perforation du film d'épaisseur 20 µm (dJ) |
|---|---|---|---|---|---|---|---|
| | | | | | sens machine | sens transverse | |
| Composition (E) 80% NATENE 54000 FB 20% NATENE BD 404 | 0,946 | 1,37 | 26 | 400 | 47 | 1,075 | 22 |
| Composition (F) 80% NATENE 54000 FB 20% Polyéthylène HP | 0,947 | 1,48 | 25,5 | 300 | 55 | 1,600 | 5 |
| NATENE 54000 FB | 0,954 | 1,2 | 29 | 350 | 48 | 810 | 14 |

EP 0 052 555 B2

Les mesures des divers propriétés citées ont été effectuées selon les normes suivantes :

| Mesures | Norme Française (NF) |
|---|---|
| Indice de fluidité | NF T 51016 |
| Densité | NF T 51063 |
| Résistance à la traction | NF T 51034 |
| Résistance au choc Charpy | NF T 51035 |
| Mesures particulières sur films Résistance à la déchirure | NF T 54108 |
| Résistance à la perforation | NF T 54109 |

## Revendications

1. Compositions de polyéthylène de haute densité et de copolymère d'éthylène et d'alpha-oléfine supérieure de type polyéthylène de basse densité linéaire, caractérisées en ce qu'elles contiennent de :

a) 50 à 98 % en poids de polyéthylène de haute densité supérieure ou égale à 0,940, obtenu par polymérisation d'éthylène ou par copolymérisation, pour au moins 96 % en poids, d'éthylène et, pour au plus 4 % en poids, d'une alpha-oléfine supérieure comportant de 3 à 8 atomes de carbone, sous une pression inférieure à $4.10^6$ Pa, et

b) 2 à 50 % en poids de copolymère d'éthylène et d'alpha-oléfine supérieure de type polyéthylène de basse densité linéaire, obtenu par copolymérisation en phase gazeuse pour 85 à 95 % en poids, d'éthylène et, pour 5 à 15 % en poids d'une ou plusieurs alpha-oléfines supérieures comportant de 3 à 8 atomes de carbone, sous une pression inférieure à $4.10^6$ Pa, en présence d'un catalyseur contenant un composé d'un métal de transition des sous-groupes IVa, Va et VIa de la Classification périodique des éléments, activé par un composé organométallique, ce polymère ayant une densité inférieure à 0,930 et un indice de fluidité égal ou supérieur au quart de l'indice de fluidité du polyéthylène de haute densité.

2. Compositions revendiquées en 1, selon lesquelles l'indice de fluidité du copolymère d'éthylène et d'alpha-oléfine supérieure de type polyéthylène de basse densité linéaire est égal ou supérieur à l'indice de fluidité du polyéthylène de haute densité.

3. Compositions revendiquées en 1, selon lesquelles le polyéthylène de haute densité est obtenu par polymérisation d'éthylène ou par copolymérisation d'un mélange d'éthylène et d'une alpha-oléfine supérieure choisie entre le propylène et le n-butene-1, en présence d'un catalyseur contenant un composé d'un métal de transition des sous-groupes IVa, Va et VIa de la Classification Périodique des Eléments.

4. Compositions revendiquées en 1, selon lesquelles le copolymère d'éthylène et d'alpha-oléfine supérieure de type polyéthylène de basse densité linéaire est obtenu par copolymérisation d'un mélange d'éthylène et d'une ou plusieurs alpha-oléfines supérieures choisies parmi le propylène, le n-butène-1, le n-hexène-1, le méthyl-4-pentène-1 et le n-octène-1.

5. Compositions revendiquées en 4, selon lesquelles le copolymère d'éthylène et d'alpha-oléfine supérieure de type polyéthylène de basse densité linéaire est obtenu par un procédé de copolymérisation en phase gazeuse, réalisé en lit fluidisé.

6. Procédé de préparation des compositions revendiquées en 1, qui consiste à effectuer le mélange des constituants à l'état fondu.

7. Procédé revendiqué en 6, dans lequel le mélange à l'état fondu est réalisé à partir du mélange de poudres ou de granulés des constituants directement dans les machines de transformation en objets finis, telles que des extrudeuses.

8. Application des compositions revendiquées en 1, à la fabrication de films et de corps creux par extrusion-soufflage.

## Patentansprüche

1. Zusammensetzungen von Polyethylen hoher Dichte und von Copolymeren aus Ethylen und höheren α-Olefinen vom Typ linearer Polyethylene niederer Dichte,
dadurch gekennzeichnet, daß sie enthalten :

a) 50 bis 98 Gew.-% eines Polyethylens hoher Dichte, die größer oder gleich 0,940 ist, das erhalten ist durch Polymerisation von Ethylen oder durch Copolymerisation von mindestens 96 Gew.-% Ethylen und höchstens 4 Gew.-% eines höheren α-Olefins mit 3 bis 8 Kohlenstoffatomen unter einem Druck von weniger als $4 \cdot 10^6$ Pa, und

b) 2 bis 50 Gew.-% eines Copolymers aus Ethylen und höheren α-Olefinen vom Typ eines linearen Polyethylens niederer Dichte, das erhalten ist durch Copolymerisation von 85 bis 95 Gew.-% Ethylen und 5 bis 15 Gew.-% eines oder mehrerer höherer α-Olefine mit 3 bis 8 Kohlenstoffatomen in der Gasphase unter einem Druck von weniger als $4 \cdot 10^6$ Pa in Gegenwart eines Katalysators, der eine Verbindung eines Übergangsmet alls der Nebengruppen IVa, Va und VIa des Periodensystems enthält und mit einer metallorganischen Verbindung aktiviert wurde, wobei dieses Polymer eine Dichte unter 0,930 und einen Fließindex gleich oder größer einem Viertel des Fließindex des Polyethylens hoher Dichte besitzt.

2. Zusammensetzungen nach Anspruch 1, wobei der Fließindex des Copolymers aus Ethylen und einem höheren α-Olefin vom Typ eines linearen Polyethylens niederer Dichte gleich oder größer als der Fließindex des Polyethylens hoher Dichte ist.

3. Zusammensetzungen nach Anspruch 1, wobei das Polyethylen hoher Dichte durch Polymerisation von Ethylen oder durch Copolymerisation eines Gemischs aus Ethylen und einem höheren, unter Propen und 1-n-Buten ausgewählten α-Olefin in Gegenwart eines Katalysators hergestellt ist, der eine Verbindung eines Übergangsmetalls der Nebengruppen IVa, Va und VIa des Periodensystems enthält.

4. Zusammensetzungen nach Anspruch 1, wobei das Copolymer aus Ethylen und höherem α-Olefin vom Typ eines linearen Polyethylens niederer Dichte durch Copolymerisation eines Gemischs aus Ethylen und aus einem oder mehreren höheren, unter Propen, 1-n-Buten, 1-n-Hexen, 4-Methyl-1-penten und 1-n-Octen ausgewählten α-Olefinen hergestellt ist.

5. Zusammensetzungen nach Anspruch 4, wobei das Copolymer aus Ethylen und höherem α-Olefin vom Typ eines linearen Polyethylens niederer Dichte durch Copolymerisation in der Gasphase im Fließbett hergestellt ist.

6. Verfahren zur Herstellung der Zusammensetzungen nach Anspruch 1, das im Mischen der Bestandteile in geschmolzenem Zustand besteht.

7. Verfahren nach Anspruch 6, wobei das Mischen in geschmolzenem Zustand, ausgehend von einem Gemisch von Pulvern oder Granulaten der Bestandteile, direkt in den Verarbeitungsmaschinen zur Herstellung der fertigen Gegenstände, wie Extrudern, durchgeführt wird.

8. Verwendung der Zusammensetzungen nach Anspruch 1 zur Herstellung von Folien und Hohlkörpern durch Extrusionsblasformen.

## Claims

1. Compositions of high density polyethylene and of copolymers of ethylene and higher α-olefins of linear low density polyethylene type,
characterized in that they comprise

a) 50 to 98 % by weight of polyethylene of high density greater than or equal to 0.940, obtained by polymerisation of ethylene or by copolymerisation of at least 96 % by weight of ethylene and at most 4 % by weight of a higher α-olefin comprising 3 to 8 carbon atoms, under a pressure of less than $4 \cdot 10^6$ Pa, and

b) 2 to 50 % by weight of a copolymer of ethylene and higher α-olefins of linear low density polyethylene type, obtained by gas phase copolymerisation of 85 to 95 % by weight of ethylene and 5 to 15 % by weight of one or more higher α-olefins, comprising 3 to 8 carbon atoms, under a pressure of less than $4 \cdot 10^6$ Pa in the presence of a catalyst containing a compound of a transition metal of subgroups IVa, Va and VIa of the Periodic Table, activated by an organometallic compound, this polymer having a density of less than 0.930 and a flow index equal to or greater than one quarter of the flow index of the high density polyethylene.

2. Compositions according to claim 1, wherein the flow index of the copolymer of ethylene and higher α-olefin of linear low density polyethylene type is equal to or greater than the flow index of the high density polyethylene.

3. Compositions according to claim 1, wherein the high density polyethylene is obtained by polymerisation of ethylene or by copolymerisation of a mixture of ethylene and a higher α-olefin selected from propene and 1-n-butene in the presence of a catalyst containing a compound of a transition metal of subgroups IVa, Va and VIa of the Periodic Table.

4. Compositions according to claim 1, wherein the copolymer of ethylene and higher α-olefin of linear low density polyethylene type is obtained by copolymerisation of a mixture of ethylene and one or more higher α-olefins selected from propene, 1-n-butene, 1-n-hexene, 4-methyl-1-pentene and 1-n-octene.

5. Compositions according to claim 4, wherein the copolymer of ethylene and higher α-olefin of linear low density polyethylene type is obtained by gas phase copolymerisation in a fluidized bed.

6. Process for preparing the compositions according to claim 1, consisting in mixing the components in the molten state.

7. Process according to claim 6, wherein the mixing in the molten state is realized, starting from a mixture of powders or granules of the components, directly in the processing machines such as extruders for transformation in finished articles.

8. Use of the compositions according to claim 1 for the production of films and hollow bodies by extrusion blow moulding.